# EUROPEAN PATENT SPECIFICATION

(11) **EP 2 781 163 B1**
(45) Date of publication and mention of the grant of the patent: **02.11.2016**
(21) Application number: 13161616.1
(22) Date of filing: 28.03.2013
(51) Int. Cl.: A23G 9/32, A23G 9/42, A23L 19/00, A23B 7/04

(54) **Method for industrial manufacturing of a frozen fruit product with a prolonged shelf life and frozen fruit product with a prolonged shelf life**
Verfahren zur industriellen Herstellung eines gefroren Früchteprodukts mit verlängerter Lagerbeständigkeit und gefrorenes Früchteprodukt mit verlängerter Lagerbeständigkeit
Procédé pour la production industrielle d'un produit de fruit congelé avec une durée de conservation prolongée et produit de fruit congelé avec une durée de conservation prolongée

(30) Priority: 21.03.2013 PL 40325813
(43) Date of publication of application: 24.09.2014
(73) Proprietor: IGLOOPOL Spólka z o.o., 30-661 Kraków (PL)
(72) Inventor: RZEWUSKI, Jacek, 30-727 Krakow (PL)
(74) Representative: Kacperski, Andrzej

(56) References cited:
- JP-A- 2008 073 011
- US-A- 4 879 127
- US-A1- 2009 208 611
- DATABASE WPI Week 201330 Thomson Scientific, London, GB; AN 2013-E22398 XP002726592, & PL 396 081 A1 (CTM GALICJA POLSKA SP ZOO) 4 March 2013 (2013-03-04)

## Description

This invention concerns a method for industrial manufacturing of a frozen fruit product with a prolonged shelf life. This invention concerns also a frozen fruit product with a prolonged shelf life.

Many methods for preparing frozen fruit products for direct consumption, for instance in the form of a fruit water ice dessert, are known. In art-known solutions fruit before freezing or after freezing is thoroughly comminuted in order to obtain a homogeneous blended pulp with a creamy consistency. The purpose of blending is to reduce or completely eliminate perceptible ice crystals in the finished product. Thus prepared pulp, before forming needs to be stabilized with a stabilizer, most often a synthetic one. Natural stabilizers applied, for instance dextrin or gelatine stabilisers must be obtained or processed beforehand.

A composition for preparing non-dairy frozen desserts is known from US 4368211, and this mixture contains by weight from 25% to 75% of a whole comminuted fruit purée, from 0.3% to 1.5% of emulsifiers, from 0.1% to 0.5% of an acid-stable polysaccharide gum, from 1% to 15% of a malto dextrin bodying agent, from 12% to 28% of a nutritive carbohydrate sweetening agent and from 1% to 19 % of an edible fatty triglyceride oil. The water content in this composition ranges between 45% and 75%. After homogenization of the composition an aerated frozen dessert can be prepared in conventional aerated frozen dessert equipment. A raw material for preparing the purée in the homogenized liquid form is any raw or frozen fruit, such as: pineapples, lemons, oranges, peaches, pears, mangos, apples, tomatoes, bananas, plums, berries of any kind; strawberries, currants, cherries or mixes of those fruits.

A frozen non-diary dessert is known from US 4948614, with a consistency of ice-cream, containing bananas or bananas with other fruit, for instance strawberries. Ripe bananas or banana mixture with other fruit are quick frozen and kept frozen until immediately before use. Before consumption the frozen bananas are masticated until smooth and then aerated. The product obtained is ready to be eaten immediately or to be re-packaged.

A food product based on fruit and sugar is known from EP 0069411. Fruit reduced to a cream is deep frozen, the blocks of deep-frozen fruit are ground to produce minute crystals, sugar syrup is added to this mass in a quantity varying between 10% and 30%, this mixture is then mixed to give a compact, soft smooth cream of colour and taste equal to that of the fruit used.

Database WPI Week 201330, Thomson Scientific, London, GD; AN 2013-E22398, XP002726592 discloses a dairy-free ice cream product production method involving deep-freezing fresh fruit. The frozen fruit is thawed to a temperature between -8°C and -3°C. The thawed fruit is cut into fruit chunks by maintaining consistency and shape. The fruit chunks are mixed with water, sugar and citric acid to form a to form a product with three-dimensional shape. The resultant product is subjected to refreezing process to a temperature between - 20°C and -80°C.

PL 20110396081 describes a method for producing dairy-free ice cream product, involving deep-freezing fresh fruit cutting thawed fruit, mixing fruit chunks with water, sugar and citric acid, forming mixture-comprising fruit pieces and dipping formed product in cocoa.

The objective of the invention is to launch an industrially manufactured fruit product, intended for long-term storage, containing mostly pure fruit, provided in natural stabilizers of the fruit shape.

The essence of the method according to this invention consists in that fresh fruit is deep frozen and then the frozen fruit is defrosted to a temperature between -6°C and -15°C, then it is cut preserving the consistency and shape of fruit bites, a natural stabilizer in the form of flake ice in the amount of 40% to 20% of the initial mass of the cut fruit is added, sweetening agent water solution and citric acids are added, the spatial shape of the product for consumption is formed, and then the obtained composition with the fruit bites retained is subjected to a deep re-freezing process at a temperature from -20°C to -80°C.

Optionally, before the repeated deep freezing, the mixture containing fruit bites, formed in the shape of product for consumption, is coated with cocoa glaze.

The essence of the product according to the invention consists in that the product formed into a spacial shape for consumption contains fruit cut into bites in the amount from 60% to 80%, a sweetening agent from 3.5% to 15%, citric acid from 0.5 to 1%, a natural stabilizer in the form of flake ice from 16% to 24%.

The frozen fruit product is advantageously coated with cocoa glaze.

The sweetening agent may be sugar in the form of glucose syrup and inverted sugar, a sweetener selected from a group containing monosaccharides, disaccharides, oligosaccharides and polysacharides or an agent selected from a group of low-calorie sweeteners containing aspartam.

The glaze contains concentrated vegetable fat, in the form of vegetable oil, sunflower oil, coconut oil, rapeseed oil, soybean oil or palm oil. It also contains emulsifiers in the form of unsaturated diglycerides and monoglycerides, lecithin, phosfatides, phospholipides.

The frozen non-diary product has a high content of fruit as a natural vitamin C source, with natural sugars, without preservatives and artificial colours. Inverted and glucose sugar applied also increase the feeling of a fruity flavour. A relevant aspect of the inverted sugar is its water activity, which enables a more delicate taste to be achieved. The use of dark cocoa glaze facilitates the spatial form of the product to be maintained.

Subjecting of frozen fruit to the cutting operation causes the natural form of its flesh is maintained. It unexpectedly occurred that frozen fruit flesh may be stabilized with a natural stabilizer, which is flake ice. Elimination of artificial stabilizers contributes to retaining the fruit taste.

Frozen fruit is defrosted to a temperature between -6°C and -15°C. Next the fruit is cut so that it retains its consistency and the shape of fine bites. The cut frozen fruit is mixed with flake ice in the amount from 40% to 20% of frozen fruit mass and the sweetener solution and citric acid are added. Flake ice performs a role of a natural stabilizer keeping the frozen fruit flesh in a compact state.

Next the obtained mixture is formed into a shape of a product ready for consumption, for instance a cube or a popsicle. The formed product is coated with a dark glaze. Then the deep freezing process at a temperature from -20°C to -80°C follows.

The initial material may be any kind of fruit, both soft and hard fruit, for instance any berries, strawberries, raspberries, currants, apples, pears, plums, bananas, pineapple, oranges etc., as well as compositions of that fruit.

The end products are packed into a packaging that reproduces the product shape, properly identified and placed in freezing warehouses, which are fitted with a cooling system based on circulation of air with a temperature from -20°C to -24°C.

### Product Example I

A frozen fruit product containing by weight:

| | |
|---|---|
| Strawberry bites | 60% |
| Sugar in water solution | 15% |
| Citric acid | 1% (in 10% solution) |
| Flake ice | 24% |

Cocoa glaze containing:
Low-fat cocoa powder
Sugar
Vegetable fats
Dried whey
Natural aroma
Emulsifier - soy lecithin

### Product Example II

A frozen fruit product containing by weight:

| | |
|---|---|
| Raspberry bites | 80% |
| Aspartam | 3.5% |
| Citric acid | 0.5% |
| Flake ice | 16% |

### Product Example III

A frozen fruit product containing by weight:

| | |
|---|---|
| Banana and apple bites | 70% |
| Glucose syrup | 9.5% |
| Citric acid | 0.5% |
| Flake ice | 20% |

Cocoa glaze containing:
Cocoa powder
Soybean oil
Lecithin emulsifier

Delicate ice crystals in the product cause a filling of coolness in the mouth during eating. Their size largely depends on the stirring intensity and the mixture solidifying rate. When the ice crystals are to big or of various sizes, a composition forms with a variety with coarse and rough consistency.

## Claims

1. Method of industrial manufacturing of a fruit product with a prolonged shelf life **characterized in that** fresh fruit is deep frozen and then the frozen fruit is defrosted to a temperature from -6°C to -15°C, then it is cut while maintaining the consistency and shape of fruit bites, a natural stabilizer in the form of flake ice in the amount of 40% to 20% of the initial mass of the cut fruit is added, sweetening agent water solution and citric acids are added, the spatial shape of the product for consumption is formed, and then the obtained composition with fruit bites maintained is subjected to a deep re-freezing process at a temperature from -20°C to -80°C.

2. Method as claimed in claim 1 **characterized in that** before the repeated deep freezing, the mixture containing fruit bites, formed in the shape of product for consumption, is coated with cocoa glaze.

3. Frozen fruit product with a prolonged shelf life containing fruit bites, **characterized in that** the product formed in a spacial shape ready for consumption contains fruit cut into bites in the amount from 60% to 80%, a sweetening agent from 3.5% to 15%, citric acid from 0.5% to 1%, a natural stabilizer in the form of flake ice from 16% to 24%.

4. Frozen fruit product as claimed in claim 3 **characterized in that** it is coated with cocoa glaze.

5. Frozen fruit product as claimed in claim 3 or 4 **characterized in that** the sweetening agent is sugar in the form of glucose syrup and inverted sugar.

6. Frozen fruit product as claimed in claim 3 or 4 **characterized in that** the sweetener is an agent selected from a group containing monosaccharides, disacharides, oligosaccharides and polysaccharides.

7. Frozen fruit product as claimed in claim 3 or 4 **characterized in that** the sweetener is an agent selected from a group of low-calories sweetening agents containing aspartam.

8. Frozen fruit product as claimed in claim 4 **characterized in that** the glaze contains concentrated vegetable fat, in the form of vegetable oil, sunflower oil, coconut oil, rapeseed oil, soya bean oil or palm oil.

9. Frozen fruit product as claimed in claim 4 **characterized in that** the glaze contains emulsifiers in the form of unsaturated diglycerides and monoglycerides, lecithin, phosfatides, phospholipides.

## Patentansprüche

1. Das Verfahren zur industriellen Herstellung eines gefroren Früchteprodukts mit verlängerter Lagerbeständigkeit, **dadurch gekennzeichnet, dass** frische Früchte tiefgekühlt werden, und dann die tiefgekühlten Früchte bis zur Temperatur von -6°C bis -15°C wieder aufgetaut werden, und bei Erhaltung der Konsistenz in Stücken geschnitten werden, dann der natürliche Stabilisator in Form von Schuppeneis in der Menge von 40% bis 20% der Anfangsmasse von geschnittenen Früchten zugegeben wird, dann die Wasserlösung eines Süßstoffes und Zitronensäure zugegeben wird und in eine räumliche Form des verzehrfertigen Produkts formiert wird, danach die Mischung mit erhaltenen Obststücken wieder in der Temperatur von -20°C bis - 80°C tiefgekühlt wird.

2. Das Verfahren nach Anspruch 1 **dadurch gekennzeichnet, dass** vor der nochmaligen Tiefkühlung die Mischung mit erhaltenen Obststücken und zum verzehrfertigen Produkt formiert mit Kakaoguss überzogen wird.

3. Gefrorenes Früchteprodukt mit verlängerter Lagerbeständigkeit, das Obststücke enthält, **dadurch gekennzeichnet, dass** es in räumliche Form des verzehrfertigen Produktes formiert ist und in Stücke geschnittene Früchte in der Menge von 60% bis 80%, Süßstoff in der Menge von 3,5% bis 15%, Zitronensäure in der Menge von 0,5 bis 1 %, natürlichen Stabilisator in Form von Schuppeneis in der Menge von 16 bis 24% enthält.

4. Gefrorenes Früchteprodukt nach Anspruch 3 **dadurch gekennzeichnet, dass** es mit dem Kakaoguss überzogen ist.

5. Gefrorenes Früchteprodukt nach Anspruch 3 oder 4, **dadurch gekennzeichnet, dass** den Süßstoff Zucker in Form von Glukosesirup und Invertzucker bildet.

6. Gefrorenes Früchteprodukt nach Anspruch 3 oder 4, **dadurch gekennzeichnet, dass** den Süßstoff ein Mittel ausgewählt aus der Gruppe von Monosacchariden, Disacchariden, Oligosacchariden und Polisacchariden bildet.

7. Gefrorenes Früchteprodukt nach Anspruch 3 oder 4, **dadurch gekennzeichnet, dass** den Süßstoff ein Mittel ausgewählt aus der Gruppe von kalorienarmen Süßstoffen bildet, die Aspartam enthalten.

8. Gefrorenes Früchteprodukt nach Anspruch 4, **dadurch gekennzeichnet, dass** der Guss konzentriertes Pflanzenfett in Form von Pflanzenöl, Sonnenblumenöl, Kokosöl, Rapsöl, Soja- oder Palmöl enthält.

9. Gefrorenes Früchteprodukt nach Anspruch 4, **dadurch gekennzeichnet dass**, der Guss Emulgatoren in Form von ungesättigten Diglyceriden und Monogliceryden, Lecithin, Phosphatiden, Phospholipiden enthält.

## Revendications

1. Procédé pour la production industrielle d'un produit de fruit congelé avec une durée de conservation prolongée **caractérisée en ce que** les fruits frais sont surgelés et, ensuite, les fruits surgelés sont décongelés jusqu'à la température de -6°C à -15°C ; aux fruits ainsi surgelés qui sont coupés en gardant la consistance et la forme de morceaux de fruits, est ajouté un stabilisateur naturel sous la forme de paillettes de glace dont la quantité représente de 40 % à 20 % de la masse initiale de fruits coupés, est ajoutée une solution aqueuse d'agent édulcorant et l'acide citrique, en est façonnée une forme de volume de produit destiné à la consommation, et, ensuite le mélange obtenu avec des morceaux de fruits sauvegardés est soumis à une nouvelle surgélation à la température de -20°C à - 80°C.

2. Procédé selon la revendication 1 **caractérisé en ce que**, avant la nouvelle surgélation, le mélange avec des morceaux de fruits façonné en forme du produit à la consommation est couvert de glaçage au chocolat.

3. Produit de fruit congelé avec une durée de conservation prolongée, contenant de morceaux de fruits **caractérisée en ce que**, façonné en forme du produit à consommer, il contient des fruits coupés en morceaux dont la quantité représente de 60 % à 80 %, l'agent édulcorant dont la quantité représente de 3,5 % à 15 %, l'acide citrique dont la quantité représente de 0,5 à 1 %, un stabilisateur naturel sous la forme de paillettes de glace dont la quantité représente de 16 à 24 %.

4. Produit de fruit congelé selon la revendication 3 **caractérisé en ce qu'**il est couvert de glaçage au chocolat.

5. Produit de fruit congelé selon la revendication 3 ou 4 **caractérisé en ce que** l'agent édulcorant est constitué du sucre sous la forme de sirop de glucose et de sucre inverti.

6. Produit de fruit congelé selon la revendication 3 ou 4 **caractérisé en ce que** l'agent édulcorant est un agent choisi du groupe contenant des monosaccharides, des disaccharides, des oligosaccharides et des polysaccharides.

7. Produit de fruit congelé selon la revendication 3 ou 4 **caractérisé en ce que** l'agent édulcorant est un agent choisi du groupe d'édulcorants à faible teneur en calories contenant l'aspartame.

8. Produit de fruit congelé selon la revendication 4 **caractérisé en ce que** le glaçage au chocolat contient de la matière grasse végétale concentrée sous la forme d'une huile végétale, d'huile de tournesol, d'huile de noix de coco, d'huile de colza ou d'huile de palme.

9. Produit de fruit congelé selon la revendication 4 **caractérisé en ce que** le glaçage contient des émulsifiants sous la forme de diglycérides et de monoglycérides insaturés, de lécithine, de phosphatides, de phospholipides.
